(19) Europäisches Patentamt
European Patent Office
Office européen des brevets

(11) **EP 2 883 918 B1**

(12) **EUROPÄISCHE PATENTSCHRIFT**

(45) Veröffentlichungstag und Bekanntmachung des Hinweises auf die Patenterteilung:
**28.10.2015 Patentblatt 2015/44**

(51) Int Cl.:
***C09D 1/00*** *(2006.01)*   ***C09D 5/00*** *(2006.01)*

(21) Anmeldenummer: **13196807.5**

(22) Anmeldetag: **12.12.2013**

(54) **Zusammensetzung für Beschichtung**

Composition for coating

Composition pour revêtement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.06.2015 Patentblatt 2015/25**

(73) Patentinhaber: **STO SE & Co. KGaA
79780 Stühlingen (DE)**

(72) Erfinder:
• **Gerlach, Günter
78183 Hüfingen (DE)**
• **Schaller, Christian
73765 Neuhausen (DE)**
• **Färber, Alexander
79879 Wutach (DE)**
• **Weh, Walter
78647 Trossingen (DE)**
• **Burgeth, Gerald
79787 Lauchringen (DE)**

(74) Vertreter: **Gottschalk, Matthias
Maiwald Patentanwaltsgesellschaft (Schweiz) mbH
Splügenstrasse 8
8002 Zürich (CH)**

(56) Entgegenhaltungen:
EP-A1- 1 441 016     EP-A1- 2 116 518
WO-A1-00/39049      JP-A- S6 366 273
US-A1- 2011 111 656

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 883 918 B1

**Beschreibung**

Die vorliegende Erfindung betrifft eine Zusammensetzung für Beschichtungen, insbesondere für Flächen die der Außenwitterung ausgesetzt sind und eine Beschichtung erhältlich aus dieser Zusammensetzung.

Oberflächenbeschichtungen die der Witterung ausgesetzt sind, sind auch Mikroorganismenwachstum ausgesetzt, welches durch Feuchtigkeit auf oder innerhalb der Oberfläche begünstigt wird. Folglich ist eine schnelle Trocknung der Oberfläche wünschenswert, welches durch entsprechende Beschichtungen erreicht werden kann. Hierzu existieren die folgenden Prinzipien.

Bei sogenannten (hoch-)hydrophoben Beschichtungen bildet sich ein hoher Kontaktwinkel aus, aufgrund dessen Wasser von der Oberfläche - getrieben von der Schwerkraft - abperlt. Flüssiges Wasser wird schnell abgeführt. Dies wird in EP 1 144 332 im Detail beschrieben.

Bei (super-)hydrophilen Beschichtungen bilden sich auf den Oberflächen keine kugelförmigen abperlenden Wassertropfen aus, sondern die Wassertropfen spreiten und bilden im günstigsten Fall einen Wasserfilm, der u. U. abfließen kann. Falls der Wasserfilm nicht vollständig abfließt, so bildet der Wasserfilm aber eine große Verdunstungsoberfläche, so dass die Oberfläche durch Verdunstung schneller rücktrocknen kann.

Bei Regen, führen normalerweise die (hoch-)hydrophoben Beschichtungen zu einer schnellen Trocknung wohingegen die (super-)hydrophilen Beschichtungen eine sehr große Wassermenge in sich aufnehmen und erst nach Ende des Regens langsam an die Umgebung wieder abgeben. Eine feuchte Beschichtung wirkt sich jedoch unter anderem negativ auf die Wärmedämmung aus.

Bei Tau ist jedoch die Wirksamkeit der (hoch-)hydrophoben Beschichtungen oft begrenzt, da sich im Vergleich zu Regen kleinere Tropfen ausbilden und die Gesamtwassermenge geringer ist als bei Regen, weswegen bei (hoch-)hydrophoben Beschichtungen sich eventuell keine Tropfen ausreichender Größe bilden.

Folglich besteht die Aufgabe der vorliegenden Erfindung darin, eine Zusammensetzung zur Beschichtung zur Verfügung zu stellen, die auch bei Tau zu einer verbesserten Rücktrocknung der Oberfläche führt.

Das erfindungsgemäße Problem wurde gelöst durch eine Zusammensetzung enthaltend

- ein hydrophobes Wachs;
- ein Silikonöl welches auschließlich Hydrocarbylseitenketten enthält; und
- ein hydrophiles Bindemittel
- Pigmente und/oder Füllstoffe

wobei
die Zusammensetzung

- eine Pigment-Volumen-Konzentration von 25 bis 60 % (wobei sich die Menge auf die Gesamtheit der Pigmente und Füllstoffe bezieht);

aufweist.

Die erfindungsgemäße Zusammensetzung und die daraus resultierende Beschichtung weisen überraschenderweise eine erhöhte Rücktrocknungs- und Ablaufgeschwindigkeit auf. Unabhängig von theoretischen Betrachtungen wird angenommen, dass die erfindungsgemäße Zusammensetzung und die daraus resultierende Beschichtung zu einer unregelmäßigen Verteilung des Wachses und des Bindemittels an der Oberfläche führen was eine Folge der Zugabe des Silikonöls zu sein scheint. Hierzu wurden EXAFS-Messungen durchgeführt, die Bereiche erhöhter Siliziumkonzentration zeigen was die Theorie zu unterstützen scheint. Wassertropfen die auf die Oberfläche gelangen oder sich dort bilden, beispielsweise in Folge von Tau befinden sich somit gleichzeitig auf Bereichen der Oberfläche die von Wachs und welche die von Bindemittel/Silikonöl bedeckt sind. Diese Bereiche weisen unterschiedliche Oberflächenenergien auf und folglich ein unterschiedliche Benetzungsverhalten. Aufgrund der unterschiedlichen Benetzungsverhalten dieser Bereiche wird davon ausgegangen, dass der Wassertropfen folglich versucht verschiedene Kontaktwinkel zur Oberfläche herzustellen, was vor allem im Übergang von Bereichen mit unterschiedlichem Benetzungsverhalten zu geringeren Oberflächenspannungen und folglich zu einer schnelleren Vereinigung der Tropfen was ein Ablaufen des Wassers beschleunigt.

Durch die erfindungsgemäße Kombination weist die Oberfläche die mit der Zusammensetzung beschichtet ist insgesamt eine im Gegensatz zu den o.g. (hoch-)hydrophoben Oberflächen eine deutlich herabgesetzte Hydrophobie auf. Lipophile unpolare Substanzen können nicht mehr so gut anhaften durch die leicht gesteigerte Polarität. Somit wurde die Verschmutzungsresistenz gegen lipophile und unpolare Substanzen erhöht.

Vorzugsweise enthält die Zusammensetzung:

- 0,1 bis 10 Gew.% des hydrophoben Wachses;

- 0,01 bis 2 Gew.% des Silikonöls;

- 10 bis 60 Gew.% des hydrophilen Bindemittels; und

- 30 bis 80 Gew. % der Pigmente und/oder Füllstoffe, wobei sich die Menge auf die Gesamtheit der Pigmente und Füllstoffe bezieht;

jeweils bezogen auf den Feststoffanteil der Zusammensetzung.

Zur Messung des Kontaktwinkels des Wachses und Silikonöls und Bestimmung der Oberflächenenergie (OFE) und deren polarer und dispersiver Anteil wurde eine Mischung von 3,8 Gew.% (Wachs) bzw. 1,1 Gew.% Silikonöl bezogen auf den Feststoffanteil in einem, im experimentellen Teil spezifizierten Polyacrylatbindemittel verwendet, da eine direkte Messung an dem reinem Wachs und reinem Silikonöl nicht möglich ist. Zur detaillierten Bestimmung des Kontaktwinkels wird auf den experimentellen Teil verwiesen. Sofern nicht anders angemerkt wird im Folgenden bezüglich des Kontaktwinkels von Wachs und Silikonöl auf diesen Kontaktwinkel Bezug genommen. Zudem wurde sofern nicht anders angemerkt bei allen Kontaktwinkelmessungen eine Äquilibrierungszeit von 3 min abgewartet.

In der vorliegenden Anmeldung bedeutet "hydrophob", dass der statische Anfangskontaktwinkel von Wasser nach 3 min Äquilibrieren > 90° ist.

In der vorliegenden Anmeldung bedeutet "hydrophil", dass der statische Anfangskontaktwinkel von Wasser nach 3 min Äquilibrieren $\leq$ 90° ist.

Vorzugsweise weist das Bindemittel einen statischen Anfangskontaktwinkel von Wasser nach 3 min Äquilibrieren von $\leq$ 90°, bevorzugter von $\leq$ 80° auf, stärker bevorzugt sind $\leq$ 75°.

Vorzugsweise weist das Wachs einen statischen Anfangskontaktwinkel von Wasser nach 3 min Äquilibrieren auf, der mindestens 5°, bevorzugt mindestens 10° höher ist als der statische Anfangskontaktwinkel von Wasser des Bindemittels nach 3 min Äquilibrieren.

Der statische Anfangskontaktwinkel von Wasser nach 3 min Äquilibrieren des Silikonöls ist vorzugsweise mindestens 5°, bevorzugt mindestens 10° höher als der statische Anfangskontaktwinkel von Wasser des Bindemittels nach 3 min Äquilibrieren.

Das Bindemittel weist normalerweise einen polaren Anteil der Oberflächenenergie von 10% oder mehr, vorzugsweise 15 % oder mehr auf. Normalerweise ist der polare Anteil nicht höher als 50 %.

Das Bindemittel weist normalerweise einen dispersiven Anteil der Oberflächenenergie von weniger als 90%, vorzugsweise von weniger als 85% auf.

Vorzugsweise beträgt der polare Anteil der mittleren OFE des Bindemittels 2 bis 20 mN/m, stärker bevorzugt sind 4 bis 15 mN/m.

Der dispersive Anteil der mittleren OFE des Bindemittels beträgt vorzugsweise 20 bis 50 mN/m, stärker bevorzugt sind 28 bis 40 mN/m.

Die mittlere OFE des Bindemittels beträgt vorzugsweise 22 bis 70 mN/m stärker bevorzugt sind 25 bis 50 mN/m, noch stärker bevorzugt sind 30 bis 45 mN/m.

Durch die Zugabe des Wachses und/oder Silikonöles wird der polare Anteil der OFE reduziert. Vorzugsweise senkt das Wachs den polaren Anteil der OFE um mindestens 8 Prozentpunkte, vorzugsweise um mindestens 12 Prozentpunkte verglichen mit dem reinen Bindemittel.

Die Absenkung des polaren Anteil der OFE des Bindemittels durch die Zugabe des Wachses und/oder Silikonöles beträgt vorzugsweise mindestens 2 mN/m, stärker bevorzugt sind 4 mN/m, noch bevorzugter sind 6 mN/m.

Vorzugsweise hat das Wachs einen polaren Anteil der OFE von 10 % oder weniger, stärker bevorzugt sind 8 % oder weniger.

Das Wachs weist normalerweise einen dispersiven Anteil der OFE von mehr als 90%, vorzugsweise von mehr als 92% auf.

Vorzugsweise beträgt der polare Anteil der mittleren OFE des Wachses 0,1 bis 6 mN/m, stärker bevorzugt sind 0,5 bis 4 mN/m.

Der dispersive Anteil der mittleren OFE des Wachses beträgt vorzugsweise 22 bis 52 mN/m, stärker bevorzugt sind 28 bis 48 mN/m.

Die mittlere OFE des Wachses beträgt vorzugsweise 23 bis 58 mN/m stärker bevorzugt sind 25 bis 50 mN/m, noch stärker bevorzugt sind 29 bis 38 mN/m.

Vorzugsweise hat das Silikonöl einen polaren Anteil der OFE von 8 % oder weniger, vorzugsweise 6 % oder weniger.

Das Silikonöl weist normalerweise einen dispersiven Anteil der OFE von mehr als 90%, vorzugsweise von mehr als 92% auf.

Vorzugsweise beträgt der polare Anteil der mittleren OFE des Silikonöls 0,1 bis 5 mN/m, stärker bevorzugt sind 0,5 bis 3 mN/m.

Der dispersive Anteil der mittleren OFE des Silikonöls beträgt vorzugsweise 25 bis 50 mN/m, stärker bevorzugt sind 30 bis 45 mN/m.

Die mittlere OFE des Silikonöls beträgt vorzugsweise 20 bis 70 mN/m stärker bevorzugt sind 26 bis 50 mN/m, noch stärker bevorzugt sind 30 bis 46 mN/m.

Durch die erfindungsgemäße Zusammensetzung ergeben sich auf der Oberfläche Bereiche mit hoher und niedriger OFE ausgedrückt durch unterschiedlich hohe oder niedrige polare und/oder dispersive Anteile der OFE. Vor allem der polare Anteil variiert stark, wie im experimentelle Teil gezeigt.

Die Bereiche mit hoher OFE entsprechen normalerweise der OFE des Bindemittels und die Bereiche niedriger OFE entsprechen normalerweise der OFE des Wachses.

Die OFE der Zusammensetzung ist aus mindestens 5 Messwertpaaren (Wasser/Diiodmethan) gemittelt und stellt somit einen Durchschnittswert der OFE ("mittlere OFE") der Bereiche mit hoher OFE und der Bereiche mit niedriger OFE.

Die OFE der Zusammensetzung ist folglich vorzugsweise um mindestens 1,5 mN/m niedriger als die des Bindemittels, vorzugsweise um mindestens 2 mN/m niedriger als die des Bindemittels, stärker bevorzugt um mindestens 3 mN/m niedriger als die des Bindemittels.

Vorzugsweise beträgt der polare Anteil der mittleren OFE der Zusammensetzung 1 bis 10 mN/m, stärker bevorzugt sind 1 bis 6 mN/m, noch stärker bevorzugt 1 bis 4 mN/m.

Der polare Anteil der mittleren OFE der Zusammensetzung ist vorzugsweise mindestens 2 mN/m niedriger als der polare Anteil der mittleren OFE des Bindemittels, mehr bevorzugt mindestens 4 mN/m niedriger als der polare Anteil der mittleren OFE des Bindemittels, noch mehr bevorzugt mindestens 6 mN/m niedriger als der polare Anteil der mittleren OFE des Bindemittels.

Der dispersive Anteil der mittleren OFE der Zusammensetzung beträgt vorzugsweise 14 bis 59 mN/m, stärker bevorzugt sind 20 bis 50 mN/m, noch stärker bevorzugt sind 25 bis 40 mN/m.

Die mittlere OFE der Zusammensetzung beträgt vorzugsweise 15 bis 60 mN/m, stärker bevorzugt sind 22 bis 52 mN/m, noch stärker bevorzugt sind 27 bis 42 mN/m.

Das Verhältnis des dispersiven zu dem polaren Anteil der mittleren OFE der Zusammensetzung beträgt vorzugsweise 50:1 bis 1:1, stärker bevorzugt sind 40:1 bis 2:1.

Der mittlere statische Anfangskontaktwinkel von Wasser nach 3 min Äquilibrieren der Zusammensetzung ist bevorzugt 50 ° bis 130°, stärker bevorzugt sind 60 bis 125°, noch stärker bevorzugt sind 70° bis 120°.

Der statische Anfangskontaktwinkels von Wasser nach 3 min Äquilibrieren der Zusammensetzung ist vorzugsweise 2° bis 20° höher als der des Bindemittels, vorzugsweise 5 bis 15° höher.

Der mittlere statische Anfangskontaktwinkel von Diiodmethan nach 3 min Äquilibrieren der Zusammensetzung ist bevorzugt 40° bis 60°, mehr bevorzugt 45° bis 55°.

Vorzugsweise weist die Zusammensetzung einen Anfangskontaktwinkel von Wasser nach 0 sec von mehr als 100° auf. Der Kontaktwinkel von Wasser sinkt schneller ab verglichen mit Zusammensetzungen aus dem Stand der Technik. Üblicherweise ist der Kontaktwinkel von Wasser der Zusammensetzung nach 0 sec 130° oder kleiner.

Der Anfangskontaktwinkels von Wasser nach 30 sec Äquilibrieren ist vorzugsweise mindestens 4° niedriger, stärker bevorzugt sind mindestens 6° niedriger als der statische Anfangskontaktwinkel von Wasser nach 0 sec.

Der Anfangskontaktwinkels von Wasser nach 3 min Äquilibrieren ist vorzugsweise mindestens 8° niedriger, stärker bevorzugt sind mindestens 10° niedriger als der statische Anfangskontaktwinkel von Wasser nach 0 sec.

Vorzugsweise beträgt der Wassergehalt auf einer senkrecht angeordneten Oberfläche beschichtet mit der erfindungsgemäßen Zusammensetzung nach Aufsprühen von Wasser in einer Menge von 85 g/m$^2$ nach 30 min bei 23°C und 50% relativer Luftfeuchtigkeit weniger als 10 Gew.-% des ursprünglich aufgetragenen Wassers, vorzugsweise weniger als 6,0 Gew.-%. Die Beschichtung wurde üblicherweise mit einer Nassschichtstärke von 200 μm aufgezogen, 2 Tage bei Raumtemperatur getrocknet und die besprühte Fläche ist üblicherweise 414 cm$^2$.

Vorzugsweise beträgt der Wassergehalt auf einer senkrecht angeordneten Oberfläche beschichtet mit der erfindungsgemäßen Zusammensetzung nach eintauchen in Wasser für 1 sec nach 30 min bei 23°C und 50% relativer Luftfeuchtigkeit weniger als 3,0 Gew.-% des ursprünglich aufgetragenen Wassers, vorzugsweise weniger als 2,5 Gew.-%. Die Beschichtung wurde üblicherweise mit einer Nassschichtstärke von 200 μm aufgezogen, 2 Tage bei Raumtemperatur getrocknet und die besprühte Fläche ist üblicherweise 414 cm$^2$.

Als Bindemittel können konventionelle Bindemittel verwendet werden wie sie im Gebiet der Beschichtungen und Farben bekannt sind. Vorzugsweise werden Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkyd-polymeren, Polyvinylalkohol und deren Mischungen eingesetzt.

Besonders bevorzugt sind Homopolymere oder Copolymere von Acrylsäure und/oder Methacrylsäure.

Das Silikonöl enthält ausschließlich Hydrocarbylseitenketten, z.B. $C_1$ bis $C_{20}$ Hydrocarbylseitenketten noch

bevorzugter hauptsächlich Alkylseitenketten, z.B. $C_1$ bis $C_{20}$ Alkylseitenketten. Durch die Abwesenheit von polaren Seitenketten weist das Silikonöl stark unpolaren Charakter auf. Normalerweise enthalten die Alkylketten nicht mehr als 5 Kohlenstoffatome. Verzweigte und lineare Polysiloxane mit methyl, ethyl oder propylseitenketten sind besonders bevorzugt.

"Hauptsächlich Alkylseitenketten" bedeutet in der vorliegenden Anmeldung, dass bei der Synthese der Silikonöle keine Seitenketten außer Alkylseitenketten absichtlich eingeführt werden.

Analoges gilt für $C_1$ bis $C_{20}$ Hydrocarbylseitenketten und $C_1$ bis $C_{20}$ Alkylseitenketten.

In einer bevorzugten Ausführungsform enthält das Silikonöl ausschließlich Alkylseitenketten gemäß einer der o.g. Ausführungsformen.

Das Silikonöl weist keine Alkoxyseitenketten auf. Die Abwesenheit von Alkoxyseitenketten kann durch Abwesenheit der symmetrischen Si-O-C-Streckschwingung im FTIR-Spektrum (940 bis 970 $cm^{-1}$) festgestellt werden.

Vorzugsweise weist das Silikonöl ein Molekulargewicht von 1000 bis 20000 g/mol auf, stärker bevorzugt sind 4000 bis 10000 g/mol.

Das Silikonöl weist vorzugsweise eine Viskosität von 75 bis 135 $mm^2$/s auf, stärker bevorzugt sind 85 bis 125 $mm^2$/s.

Vorzugsweise enthält die Zusammensetzung nur Silikonöle die die o.g. Eigenschaften oder deren bevorzugten Ausführungsformen aufweisen.

Wie oben erwähnt wird davon ausgegangen, dass das Silikonöl zu einer unregelmäßigen Verteilung des Wachses und des Bindemittels an der Oberfläche, also verlaufsstörende Wirkung aufweist, welches wiederum als eine der Ursachen für den Effekt der Erfindung angenommen wird. Im Unterscheid hierzu weisen viele Silikonverbindungen, z.B. Benetzungsmittel die auch siliziumbasiert sein können, verlaufsfördernde Wirkung auf, die normalerweise durch tensidartige Strukturen erreicht wird.

Vorzugsweise beträgt die Pigment-Volumen-Konzentration der Zusammensetzung 30 bis 55 %, noch mehr bevorzugt sind 35 bis 50%.Das Wachs hat bevorzugt einen Schmelzbereich innerhalb des Bereiches von 80 und 160 °C. Üblicherweise ist das Wachs Siliziumfrei.

Beispiele sind natürliche Wachse, z. B. Bienenwachs, Carnaubawachs und Paraffinwachse, und synthetische Wachse, wie Polyalkylenwachse, Polyamide, oxidierte Polyalkylenwachse, Wachse aus niedermolekularen Copolymeren von Ethylen und Acrylsäure bzw. Acrylaten. Besonders bevorzugt sind Polyethylen- oder polyamidwachse und am stärksten bevorzugt sind Polyethylenwachse. Im Fall von mehr als einem Wachs beziehen sich Mengen und Temperaturangaben auf die Gesamtheit der Wachse, bevorzugt wird jedoch nur ein Wachs verwendet.

Vorzugsweise beträgt die Menge des Wachses 0,2 bis 5 Gew.% bezogen auf den Feststoffanteil der Zusammensetzung.

Die Menge des Silikonöls beträgt vorzugsweise 0,1 bis 1,5 Gew.% bezogen auf den Feststoffanteil der Zusammensetzung, stärker bevorzugt sind 0,2 bis 1,0 Gew.% bezogen auf den Feststoffanteil der Zusammensetzung.

Die Pigmente und/oder Füllstoffe werden vorzugsweise aus pyrogen gefällter Kieselsäure, gefällter Kieselsäure, Silizium-Aluminium-Mischoxiden, Carbonate, z.B. Erdalkalicarbonate wie Calciumcarbonat, Siliziumdioxid, Silikate, z.B. Aluminosilikate, Sulfate, z.B. Bariumsulfate, Titandioxid, Buntpigmente, z.B. Eisenoxide, Bismutvanadate oder Mischungen hiervon ausgewählt. Stärker bevorzugt sind Titandioxid, Silikate und Carbonate.

In einer Ausführungsform bestehen die Pigmente und/oder Füllstoffe aus anorganischen Pigmenten und/oder anorganischen Füllstoffen.

Vorzugsweise beträgt die Menge an Pigmenten und Füllstoffen, wobei sich die Menge auf die Gesamtheit der Pigmente und Füllstoffe bezieht 35 bis 50 Gew.% bezogen auf den Feststoffanteil der Zusammensetzung.

Die Partikelgröße der Pigmente und Füllstoffe liegt normalerweise im Bereich von 0,1 bis 100 $\mu$m, vorzugsweise 0,2 bis 50 $\mu$m.

Die Zusammensetzung kann des Weiteren bis zu 8.0 Gew.%, vorzugsweise bis zu 5.0 Gew.% bezogen auf den Feststoffanteil der Zusammensetzung an üblichen Additives, z.B. Dispergiermitteln, Verdickern, Netzmittel, Biozide, Entschäumern, etc., enthalten.

Die Zusammensetzung ist vorzugsweise eine Form- oder Beschichtungsmasse, stärker bevorzugt ist ein Anstrichmittel oder Putz.

Die Zusammensetzung kann als wässrige Dispersion vorliegen. Wenn eine wässrige Dispersion vorliegt beträgt der Wasseranteil vorzugsweise 20 bis 60 Gew.%. Die Erfindungsgemäße Zusammensetzung kann aber auch eine Dispersion an einem oder mehrerer organischer Lösemittel sein. Solche organischen Lösemittel können aliphatische oder aromatische Kohlenwasserstoffe, beispielsweise Toluol, Alkohole Ester oder Ketone, sein, die als Lösemittel für Bindemittel und Lacke bekannt sind. Wenn eine Dispersion an organischen Lösemitteln vorliegt beträgt der Lösemittelanteil vorzugsweise 20 bis 50 Gew.%.

Die erfindungsgemäße Zusammensetzung kann alternativ eine Dispersion an einer Mischung aus Wasser und den zuvor genannten organischen Lösemitteln sein.

Die Menge an zugesetztem Wasser oder organischem Lösemittel wird vom Fachmann je nach der beabsichtigen Anwendung ausgewählt. Bei Dispersionen an einer Mischung aus Wasser und den zuvor genannten organischen Lösemitteln beträgt der Wasseranteil vorzugsweise mehr als 50 Gew.% bezogen auf die Gesamtmasse von Wasser und organischem Lösemittel.

Die Erfindung stellt weiterhin eine Beschichtung auf einer Substratoberfläche zur Verfügung, die Beschichtung enthaltend

- ein hydrophobes Wachs;
- ein Silikonöl welches ausschließlich Hydrocarbylseitenketten enthält; und
- ein hydrophiles Bindemittel
- Pigmente und/oder Füllstoffe
  wobei
  die Zusammensetzung
- eine Pigment-Volumen-Konzentration von 35 bis 55 %;
  aufweist.

Vorzugsweise enthält die Beschichtung

- 0,1 bis 10 Gew.% des hydrophoben Wachses;
- 0,01 bis 2 Gew.% des Silikonöls;
- 10 bis 60 Gew.% des hydrophilen Bindemittels; und
- 30 bis 80 Gew. % der Pigmente und/oder Füllstoffe, wobei sich die Menge auf die Gesamtheit der Pigmente und Füllstoffe bezieht;

Die Beschichtung liegt vorzugsweise in der ausgehärteten Form vor.

Die bevorzugten Ausführungsformen der Zusammensetzung gemäß der Erfindung sind auch bevorzugte Ausführungsformen der Beschichtung gemäß der vorliegenden Erfindung.

Das Substrat ist vorzugsweise eine Wand, stärker bevorzugt sind Außenflächen, die der Bewitterung ausgesetzt sind, z.B. Außenfassaden von Gebäuden.

MESSMETHODEN

Schmelzpunkt Wachs:

ISO EN 11357-3

Kontaktwinkel und Oberflächenenergie sowie deren polarer und dispersiver Anteil

Als Prüfsubstanzen für den Kontaktwinkel wurden Wasser und Diiodmethan verwendet. Die Tropfengröße war jeweils $2\mu$l bis $4\mu$l.

Da eine direkte Vermessung einer Wachsoberfläche u.U. nicht möglich ist, da das Wachs beim aushärten auskristallisieren kann und somit eine Messung nicht möglich oder zu weich wurde eine Mischung von 3,85 Gew.% Wachs und 96,15 Gew.% des unten genannten Bindemittels bezogen auf den Feststoffanteil hergestellt und eine entsprechende Beschichtung erstellt. Die Kontaktwinkelmessungen erfolgten an dieser Oberfläche.

Silikonöle sind normalerweise viskose Flüssigkeiten und daher ist ebenfalls eine direkte Messung an deren Oberfläche normalerweise nicht möglich. Daher wurde eine Mischung aus 1,13 Gew.% Silikonöls bezogen und 98,87 Gew.% des unten genannten Bindemittels bezogen auf den Feststoffanteil hergestellt und eine entsprechende Beschichtung erstellt. Die Kontaktwinkelmessungen erfolgten an dieser Oberfläche.

Als Bindemittel wurde eine wässrige Dispersion basierend auf einem Copolymer aus Acryl- und Methacrylsäureestern aufweisend einen Festkörperanteil von 46 Gew.% eine Brookfieldviskosität von ca. 7000 mPa·s nach DIN EN ISO 2555 (Spindel 4; 20 Upm; 23°C), erhältlich als Mowilith LDM 7724 von Celanese verwendet.

Der statische Kontaktwinkel wurde nach 2 Tagen Trocknung bei 23 °C und 50 % relativer Luftfeuchtigkeit bestimmt. Nach Auftragen des Wassertropfens bzw. Diiodmethantropfens wird 180 sec abgewartet bevor die Messung erfolgt.

Die Bestimmung des Kontaktwinkels an der Dreiphasen-Berührungslinie zwischen Festkörper, Flüssigkeit und Gas erfolgt mit dem Kontaktwinkelmessgerät G1 der Firma Krüss. Auf jedem Prüfkörper werden jeweils mindestens fünf Tropfen an verschiedenen Stellen gemessen.

Die Bestimmung der Oberflächenenergie erfolgt nach der Methode von Owens-Wendt-Rabel-Kaeble wie folgt (Quelle Krüss AG).

Nach OWENS, WENDT, RABEL und KAELBLE lässt sich die Oberflächenspannung jeder Phase in einen polaren und einen dispersiven Anteil aufspalten:

$$\sigma_I = \sigma_I^P + \sigma_I^D \quad \text{(Gleichung 1)}$$

$$\sigma_s = \sigma_s^P + \sigma_s^D \quad \text{(Gleichung 2)}$$

OWENS und WENDT legten ihre Gleichung der Grenzflächenspannung

$$\gamma_{sl} = \sigma_s + \sigma_I - 2\left(\sqrt{\sigma_s^D \cdot \sigma_I^D} + \sqrt{\sigma_s^P \cdot \sigma_I^P}\right) \quad \text{(Gleichung 3)}$$

zugrunde und kombinierten sie mit der YOUNG-Gleichung

$$\sigma_s = \gamma_{sl} + \sigma_I \cdot \cos\theta \quad \text{(Gleichung 4)}$$

Die beiden Autoren lösten das Gleichungssystem mit Hilfe von Kontaktwinkeln zweier Flüssigkeiten mit bekanntem dispersiven und polaren Anteil der Oberflächenspannung. Die Gleichungen 3 und 4 werden kombiniert und die resultierende Gleichung durch Umstellung an die allgemeine Geradengleichung angepasst.

$$y = mx + b \quad \text{(Gleichung 5)}$$

an. Die angepasste Gleichung sieht folgendermaßen aus:

$$\underbrace{\qquad\qquad}_{y} = \qquad\qquad \text{(Gleichung 6)}$$

Bei einer linearen Regression der Auftragung von y gegen x ergibt sich $\sigma_s P$ aus dem Quadrat der Geradensteigung m und $\sigma_3 D$ aus dem Quadrat des Ordinatenabschnitts b.
Die Oberflächenenergien sind in mN/m angegeben.

Pigment-Volumen-Konzentration

Die Pigment-Volumen-Konzentration (EN ISO 4618-1) gibt das Volumenverhältnis zwischen Pigmenten / Füllstoffen und dem Bindemittel im Beschichtungsfilm wieder.
Die ebenfalls in der Rezeptur enthaltenen Additive wurden in der Berechnung nicht berücksichtigt. Lösemittel und Wasser sind im gehärteten Film ohnehin nicht mehr enthalten und fallen damit ebenfalls weg. Das Wachs und Silikonöl, sofern vorhanden wurde bei der Berechnung nicht berücksichtigt.

Viskosität Silikonöl

DIN 53015

FTIR (Abwesenheit der symmetrischen Si-O-C-Streckschwingung)

Die Messung wurde durchgeführt mit einem FTIR-Spektrometer Perkin-Elmer Spectrum 100 mit Universal ATR Accessory. Die Abwesenheit der symmetrischen Si-O-C-Streckschwingung bei 940 - 970 cm$^{-1}$ zeigt die Abwesenheit von Alkoxyseitenketten an.

BEISPIELE:

Verwendete Stoffe:

Bindemittel:

Wässrige Dispersion basierend auf einem Copolymer aus Acryl- und Methacrylsäureestern aufweisend einen Festkörperanteil von 46 Gew.% eine Brookfieldviskosität von ca. 7000 mPa·s nach DIN EN ISO 2555 (Spindel 4; 20 Upm; 23°C), erhältlich als Mowilith LDM 7724 von Celanese.

anorganisches Pigment:

Titandioxid, mittlere Partikelgröße < 1 $\mu$m

anorganische Füllstoffe:

Calziumcarbonat, mittlerer Teilchendurchmesser $D_{50}$ 2,5 $\mu$m
Magnesiumsilikat
Aluminiumsilikat, mittlerer Teilchendurchmesser $D_{50}$ 25 $\mu$m

Wachs:

Polyethylenwachs mit einem Schmelzbereich von 100 bis 110 °C, einer Dichte von 0.98 g/cm$^3$ und einer Viskosität von 40 mPa·s (DIN 53019 1.921s-1). Dispersion mit einem Feststoffanteil von 35 Gew.%

Silikonöl

Alkoxygruppenfreies Dimethylpolysiloxan aufweisend eine Viskosität von 90 mm$^2$/s und einem Molekulargewicht von. 6100 g/mol

Zunächst wurden Mischungen aus dem reinen Bindemittel und Wachs und/oder Silikonöl untersucht. Hierzu wurden die Zusammensetzungen aus Tabelle 1 mit 200 $\mu$m Nassschichtstärke aufgezogen und getrocknet wie oben ausgeführt und die Kontaktwinkel nach 3 min Äquilibrierungszeit des Tropfens auf der Oberfläche mit Wasser und Diiodmethan, die OFE, sowie der dispersive (DA) und polare Anteil (PA) der OFE bestimmt.

Die Mengenangaben in Tabelle 1 des PE-Wachses beziehen sich auf eine Wässrige Dispersion mit einem Feststoffanteil von 35 Gew.% und die des Bindemittels auf eine wässrige Dispersion mit einem Festkörperanteil von 46 Gew.%. Das Silikonöl liegt als reine Verbindung vor.

| Tabelle 1 | Kontaktwinkel [°] | | OFE* | DA* | PA* | DA[%] | PA[%] | DA/PA |
|---|---|---|---|---|---|---|---|---|
| | Wasser | Diiodmethan | | | | | | |
| Bindemittel | 73,4 | 53,3 | 40,4 | 32,4 | 8,0 | 80,2 | 19,8 | 4,0 |
| Bindemittel + 5 Gew.% Wachs | 91,7 | 54,2 | 33,5 | 31,9 | 1,6 | 95,3 | 4,7 | 20,2 |
| Bindemittel + 0,5 Gew.% Silikonöl | 88,4 | 44,4 | 38,9 | 37,3 | 1,6 | 96,0 | 4,0 | 23,9 |
| Bindemittel + 4,5 Gew.% Wachs +0,5 Gew. Silikonöl | 89,3 | 47,4 | 37,3 | 35,7 | 1,6 | 95,8 | 4,2 | 22,8 |
| Bindemittel + 5 Gew.% Wachs +0,5 Gew. Silikonöl | 89,9 | 47,8 | 37,0 | 35,5 | 1,5 | 96,0 | 4,0 | 24,0 |
| * Einheit [mN/m] | | | | | | | | |

Erkennbar ist die deutliche Zunahme des Kontaktwinkels von Wasser bei Wachs und/oder Silikonölzugabe.

Des weiteren wurde die folgende Zusammensetzung hergestellt und, der Kontaktwinkel, die OFE sowie deren polarer und dispersiver Anteil der daraus erhaltenen Beschichtung bestimmt (Angaben in Gew.%).

Wasser:                                         10,0

(fortgesetzt)

| | |
|---|---|
| Acrylat-bindemitteldispersion Feststoffanteil 46 Gew.% | 43,0 |
| Titandioxid | 14,0 |
| Füllstoffe (silikate/carbonate) | 24,0 |
| Addtive (Dispergiermittel, Verdicker, Entschäumer, Biozide etc. | 3,5 |
| PE-Wachsdispersion Feststoffanteil 35 Gew.% | 5,0 |
| Dimethylpolysiloxan | 0,5 |

Die resultierende Beschichtung hatte eine PVK von 40 %

Zudem wurde der Pigment- und Füllstoffanteil variiert um Zusammensetzungen mit PVK 30, 50 und 60 zu erhalten. Die Ergebnisse sind in folgender Tabelle dargestellt.

Tabelle 2

| | Kontaktwinkel [°] | | OFE* | DA* | PA* | DA[%] | PA[%] | DA/PA | # |
|---|---|---|---|---|---|---|---|---|---|
| | Wasser | Diiodmethan | | | | | | | |
| PVK 30 | 86,6 | 49,3 | 37,1 | 34,7 | 2,4 | 93,5 | 6,5 | 14,4 | 5,6 |
| PVK 40 | 87,0 | 53,2 | 35,1 | 32,8 | 2,2 | 93,7 | 6,3 | 14,8 | 5,8 |
| PVK 50 | 83,0 | 49,8 | 37,9 | 34,4 | 3,6 | 90,6 | 9,4 | 9,6 | 4,4 |
| PVK 60 | 94,5 | 50,5 | 34,8 | 34,0 | 0,8 | 97,7 | 2,3 | 43,0 | 7,2 |
| * Einheit [mN/m] # PA [mN/m] (Bindemittel) - PA [mN/m] (Zusammensetzung) | | | | | | | | | |

Der polare Anteil des Bindemittels betrug 8,0 mN/m bzw. 19,8%.

Zwischen einer PVK von 40% und 50% erfolgt eine sichtbare, sprunghafte Verbesserung des Benetzungsverhaltens, bei PVK = 60% verschlechterte es sich wieder. Hier wird angenommen, dass sich der hohe Anteil an Pigmenten und Füllstoffen sich bemerkbar macht.

Dynamik des Kontaktwinkels (Wasser)

Nachfolgend ist zu sehen, dass die Änderung des Kontaktwinkels über der Zeit bei der erfindungsgemäßen Farbformulierung deutlich schneller erfolgt als bei den Referenzbeispielen. Zudem ist der Unterschied zwischen Kontaktwinkel bei 180 sec im Vergleich zum Kontaktwinkel bei 0 sec größer.

Hierzu wurde die Farbformulierung mit PVK=40% aus dem vorangegangenen Beispiel verwendet wobei der Wachs und Silikonölanteil wie in den folgenden Tabellen 3a bis 3d variiert wurde. Bei dem Wachs beziehen sich die Angaben wie oben auf eine Dispersion mit einem Feststoffanteil von 35 Gew.%.

Tabelle 3a

| Nr. | | Referenz 1 | | | |
|---|---|---|---|---|---|
| Beschreibung | 0% Wachs 0% Silikonöl | | | | |
| | | | | | |
| Zeit in sec | Messung 1 | Messung 2 | Messung 3 | Messung 4 | Messung 5 |
| 0 | 93,2 | 90,3 | 96,6 | 94,4 | 90,7 |
| 30 | 91,5 | 89,1 | 94,2 | 92,2 | 89,1 |
| 60 | 88,0 | 88,5 | 93,6 | 91,8 | 88,2 |
| 90 | 88,4 | 87,9 | 92,0 | 91,4 | 87,6 |
| 120 | 87,8 | 87,4 | 90,1 | 90,2 | 86,9 |
| 150 | 87,0 | 86,9 | 88,5 | 89,5 | 86,0 |

(fortgesetzt)

| Zeit in sec | Messung 1 | Messung 2 | Messung 3 | Messung 4 | Messung 5 |
|---|---|---|---|---|---|
| 180 | 86,3 | 86,4 | 87,9 | 89,3 | 86,7 |
| n.g. nicht gemessen | | | | | |

Tabelle 3b

| Nr. | |
|---|---|
| Beschreibung | 4,5% Wachs 0% Silikonöl |

**Referenz 2**

| Zeit in sec | Messung 1 | Messung 2 | Messung 3 | Messung 4 | Messung 5 |
|---|---|---|---|---|---|
| 0 | 95,9 | 94,6 | 94,4 | 108,5 | 110,3 |
| 30 | 95,0 | 93,6 | 94,2 | 107,6 | 106,7 |
| 60 | 93,8 | 93,1 | 93,8 | 106,8 | 103,7 |
| 90 | 91,8 | 92,6 | 93,4 | 105,8 | 103,1 |
| 120 | 86,2 | 92,0 | 92,7 | 105,1 | 102,5 |
| 150 | 85,2 | 91,5 | 92,1 | 104,7 | 102,3 |
| 180 | 84,5 | 90,9 | 91,4 | 103,9 | 101,4 |

Tabelle 3c

| Nr. | |
|---|---|
| Beschreibung | 0% Wachs 0,5% Silikonöl |

**Referenz 3**

| Zeit in sec | Messung 1 | Messung 2 | Messung 3 | Messung 4 | Messung 5 |
|---|---|---|---|---|---|
| 0 | 94,9 | 93,5 | 94,6 | 95,3 | 95,5 |
| 30 | 92,0 | 93,2 | 93,8 | 94,0 | 95,4 |
| 60 | 91,7 | 92,5 | 92,8 | 93,1 | 94,1 |
| 90 | 90,8 | 91,9 | 92,1 | 92,4 | 94,1 |
| 120 | 90,0 | 91,3 | 91,4 | 91,5 | 93,1 |
| 150 | 89,3 | 90,6 | 90,8 | 90,8 | 92,7 |
| 180 | 88,6 | 90,0 | 90,1 | 90,2 | 91,0 |

Tabelle 3d

| Nr. | | **Erfindungsgemäß** |
|---|---|---|
| Beschreibung | 4,5% Wachs; 0,5% Silikonöl | |

| Zeit in sec | Messung 1 | Messung 2 | Messung 3 | Messung 4 | Messung 5 |
|---|---|---|---|---|---|
| 0 | 103,4 | 110,0 | 103,0 | 102,7 | 107,6 |
| 30 | 95,8 | 97,8 | 96,0 | 94,3 | 96,8 |

| | | | | | |
|---|---|---|---|---|---|
| 60 | 95,0 | 95,1 | 94,6 | 93,3 | 95,9 |
| 90 | 93,0 | 93,9 | 93,7 | 92,7 | 95,3 |
| 120 | 92,3 | 92,0 | 92,9 | 91,5 | 94,6 |
| 150 | 91,4 | 92,3 | 92,5 | 90,7 | 94,0 |
| 180 | 91,0 | 92,0 | 92,0 | 90,2 | 93,5 |

n.g. nicht gemessen

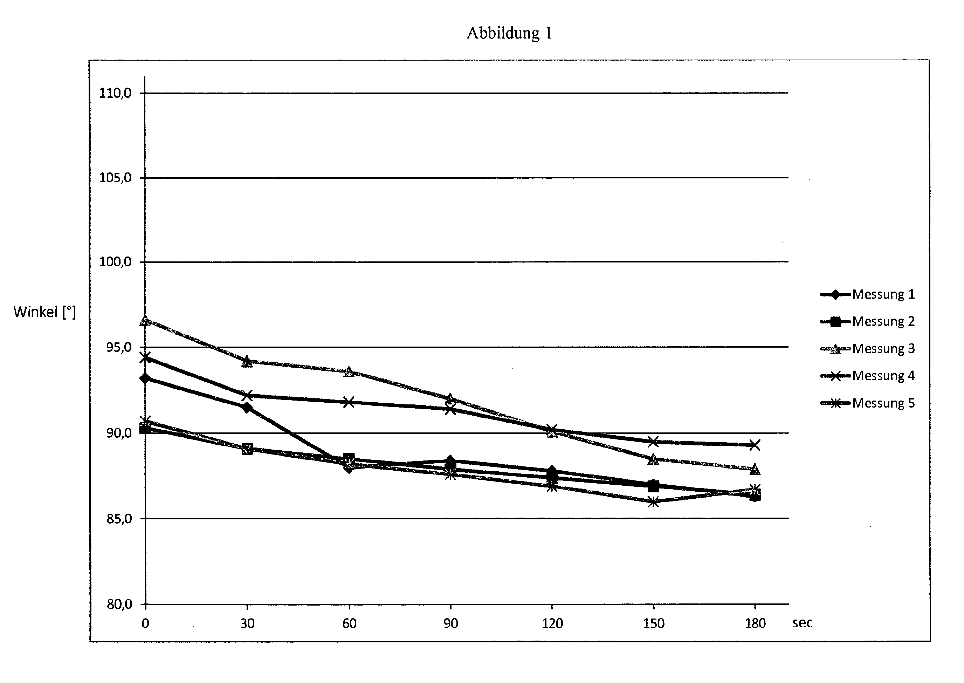

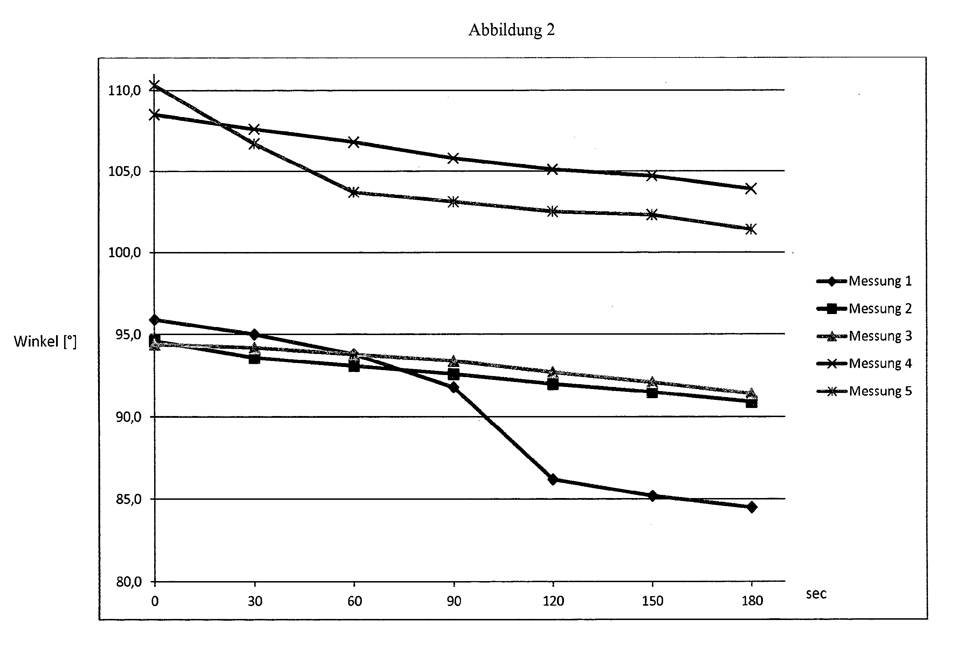

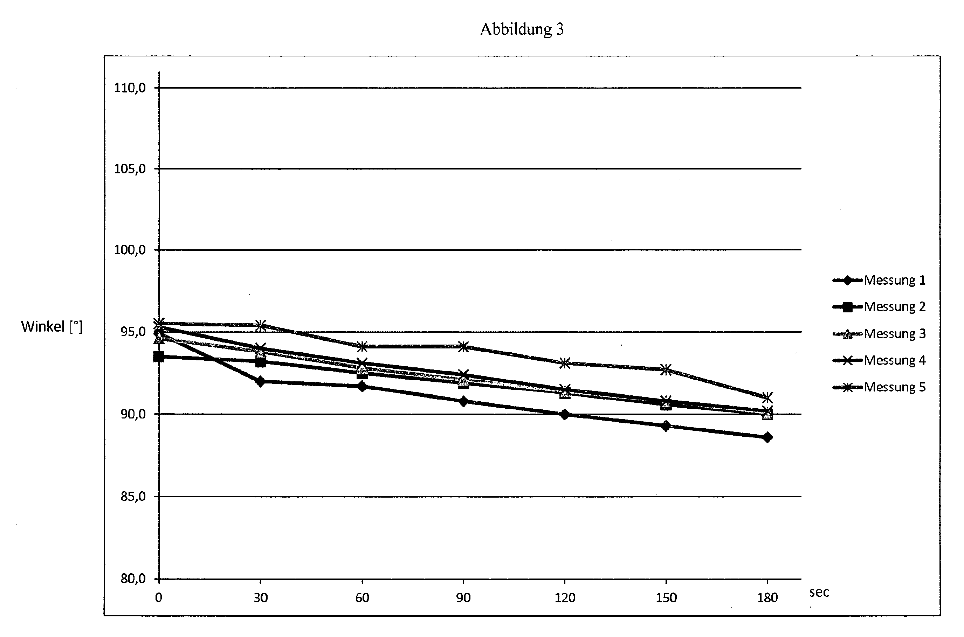

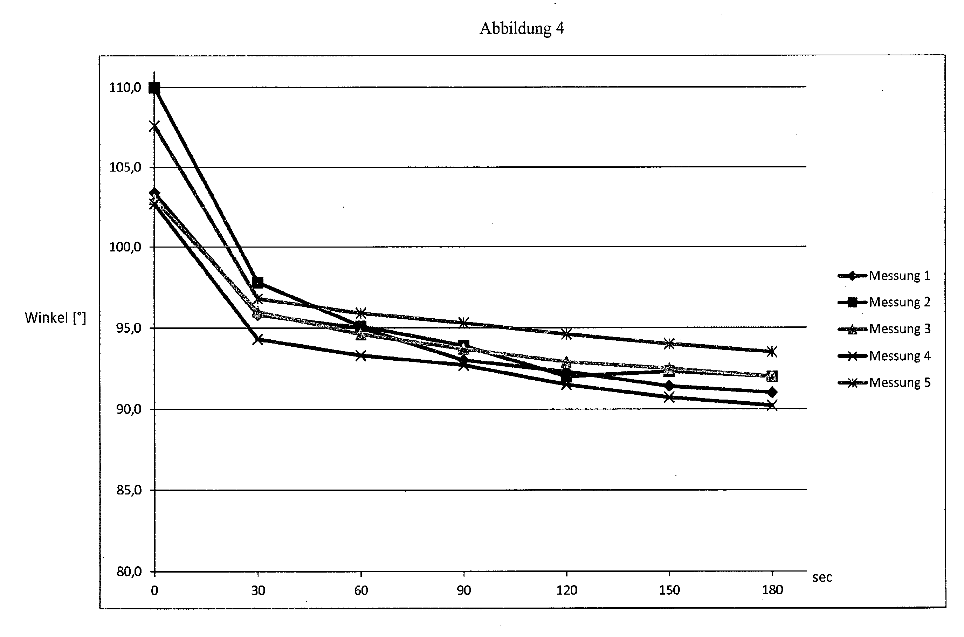

Der zeitliche Verlauf der Abnahme des Kontaktwinkels ist in Abbildungen 1 bis 4 gezeigt.

Abb.1: Referenz 1 Zusammensetzung + 0% Wachs + 0% Silikonöl

Abb. 2: Referenz 2 Zusammensetzung + 4,5% Wachs + 0% Silikonöl

Abb. 3: Referenz 3 Zusammensetzung + 0% Wachs + 0,5% Silikonöl

Abb. 4: Referenz 4 Zusammensetzung + 4,5% Wachs + 0,5% Silicon

Wie aus obigen Messungen erkennbar weist die erfindungsgemäße Formulierung nicht nur einen höheren Kontaktwinkel bei 0 sec auf, der Abfall des Kontaktwinkels nach 180 sec beträgt 12° oder mehr und ist somit auch höher als bei den Referenzbeispielen. Zudem findet bereits innerhalb der ersten 30 sec ein deutlicher Abfall des Kontaktwinkels statt.
Die erfindungsgemäßen Zusammensetzungen weisen ebenfalls schnellere Rücktrocknung der Oberfläche auf.
Dies wurde anhand der folgenden Versuche nachgewiesen.
Hierzu wurden Aufzüge mit einer Nassschichtstärke von 200 $\mu$m Dicke auf PVC Folie erstellt und 2 Tage bei Raumtemperatur getrocknet. Die Oberfläche betrug 414 cm$^2$.
Die beschichtet PVC Folie wurde schwebend aufgehängt und tariert. Anschließend aus einer Entfernung mit ca. 35 cm mit destilliertem Wasser ca. 3,5 g aufgesprüht. Die Rücktrocknung wurde 30 min beobachtet und alle 5 min das Gewicht festgehalten. Die Prüfung wurde bei Normklima 23°C/50% rel. Feuchte durchgeführt.
Hierzu wurde die oben aufgeführte erfindungsgemäße Zusammensetzung PVK 40 verwendet mit dem Unterschied, dass 4,5 Gew.% Wachsdispersion anstelle von 5,0 Gew.% Wachsdispersion verwendet wurde, im Folgenden als IE3 bezeichnet.
IE3 wurde mit einer hoch-hydrophoben Beschichtung (Ref1) aufweisend einen Kontaktwinkel mit Wasser nach 3 min Äquilibierungszeit von 125° und einer hydrophilen Oberfläche aus herkömmlicher Dispersion-Silikat-Fassadenfarbe ohne hydrophobierungsmittel (Ref2) verglichen. Ref2 sieht optisch nach ca. 15 min trocken aus, wie aus der Messung ersichtlich enthält die Beschichtung eine erhebliche Menge Feuchtigkeit.

Tabelle 4

| | Ref1 | | IE3 | | Ref2 | |
|---|---|---|---|---|---|---|
| | | | 4,5% Wachs | | | |
| | | | 0,5% Silikonöl | | | |
| | | | | | | |
| | [g] | [%] | [g] | [%] | [g] | [%] |
| Start | 3,71 | 100,0 | 3,52 | 100,0 | 3,51 | 100,0 |
| 5' | 3,29 | 88,7 | 2,17 | 61,6 | 2,20 | 62,7 |
| 10' | 2,82 | 76,0 | 1,50 | 42,6 | 1,74 | 49,6 |
| 15' | 2,34 | 63,1 | 1,00 | 28,4 | 1,25 | 35,6 |
| 20' | 1,91 | 51,5 | 0,62 | 17,6 | 0,91 | 25,9 |
| 25' | 1,45 | 39,1 | 0,35 | 9,9 | 0,57 | 16,2 |
| 30' | 1,05 | 28,3 | 0,16 | 4,5 | 0,30 | 8,5 |

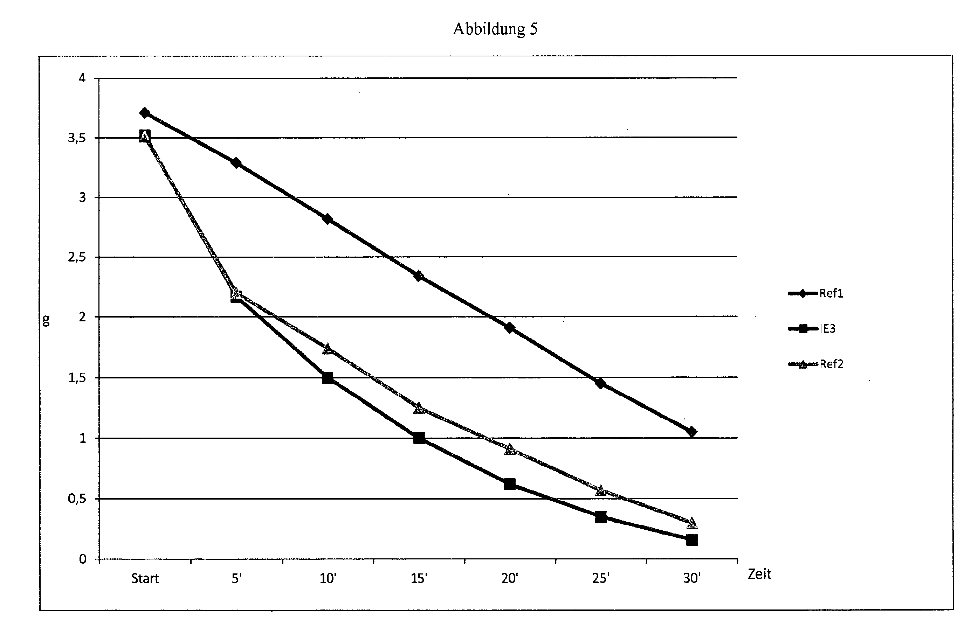

Der zeitliche Verlauf der auf oder in der Oberfläche verbleibenden Wassermenge ist in Abbildungen 5 (Gewicht/Zeit) und 6 (Gew.%/Zeit) dargestellt.

Zudem wurde die o.g. Beschichtungen für 1 sec vollständig in Wasser getaucht und anschließend innerhalb von 5 sec an die Waage aufgehängt.

Die Rücktrocknung wurde 30 min beobachtet und alle 5 min das Gewicht festgehalten. Die Prüfung wurde bei Normklima 23°C/50% rel. Feuchte durchgeführt

Tabelle 5

| | Ref1 | | IE3 | | Ref2 | |
|---|---|---|---|---|---|---|
| | | | 4,5% Wachs | | | |
| | | | 0,5% Silikonöl | | | |
| | | | | | | |
| | [g] | [%] | [g] | [%] | [g] | [%] |
| Start | 1,53 | 100 | 1,05 | 100 | 2,60 | 100,00 |
| 5' | 0,52 | 34,0 | 0,26 | 24,8 | 1,69 | 65,0 |
| 10' | 0,26 | 17,0 | 0,19 | 18,1 | 1,21 | 46,5 |
| 15' | 0,12 | 7,8 | 0,13 | 12,4 | 0,79 | 30,4 |
| 20' | 0,08 | 5,2 | 0,10 | 9,5 | 0,45 | 17,3 |
| 25' | 0,06 | 3,9 | 0,06 | 5,7 | 0,21 | 8,1 |
| 30' | 0,03 | 1,0 | 0,02 | 1,9 | 0,10 | 3,9 |

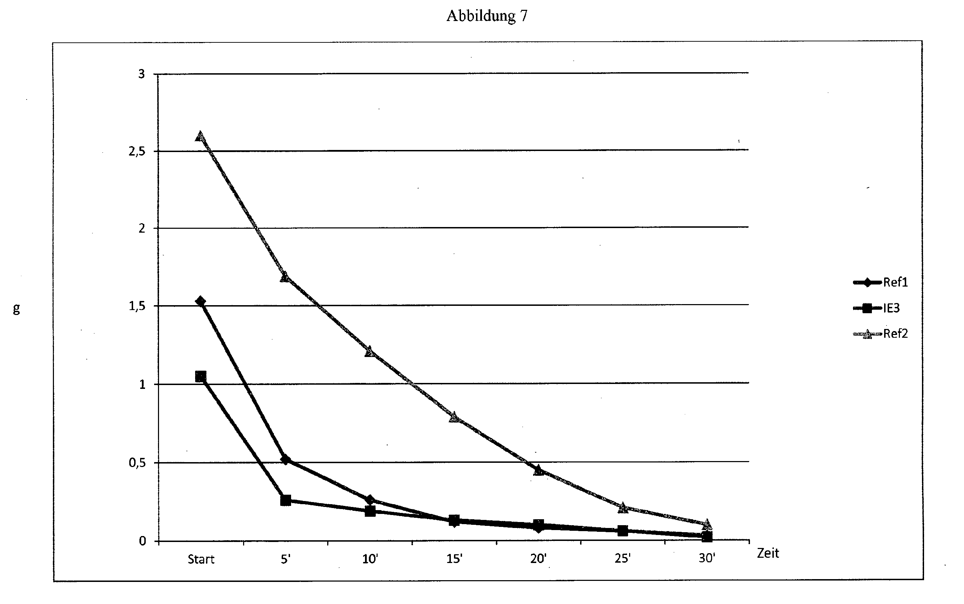

Der zeitliche Verlauf der auf oder in der Oberfläche verbleibenden Wassermenge ist in Abbildungen 7 (Gewicht/Zeit) und 8 (Gew.%/Zeit) dargestellt.

Wasseraufnahme nach EN1062-1 und -3: W-Wert Durchlässigkeit für Wasser Aufgrund dieser Eigenschaft lässt sich der Widerstand der Beschichtung gegen das Eindringen und Aufnehmen von Wasser beurteilen.

| Ref1 | IE3 | Ref2 |
|---|---|---|
| 0,05 kg/(m$^{2.h0,5}$) | 0,02 kg/(m$^{2\cdot h0,5}$) | 1,17 kg/(m$^{2\cdot h0,5}$) |
| Klasse W3 | Klasse W3 | Klasse W1 |

**Patentansprüche**

1.  Zusammensetzung enthaltend

    - ein hydrophobes Wachs;
    - ein Silikonöl welches ausschließlich Hydrocarbylseitenketten enthält; und
    - ein hydrophiles Bindemittel
    - Pigmente und/oder Füllstoffe

    wobei
    die Zusammensetzung

    - eine Pigment-Volumen-Konzentration von 25 bis 60 % gemäß EN ISO n4618-1 (wobei sich die Menge auf die Gesamtheit der Pigmente und Füllstoffe bezieht);

    aufweist
    wobei
    "hydrophob" bedeutet, dass der statische Anfangskontaktwinkel von Wasser nach 3 min Äquilibrieren > 90° ist;
    "hydrophil" bedeutet, dass der statische Anfangskontaktwinkel von Wasser nach 3 min Äquilibrieren ≤ 90° ist.

2.  Die Zusammensetzung gemäß Anspruch 1 wobei das Wachs einen statischen Anfangskontaktwinkel von Wasser nach 3 min Äquihbrieren aufweist, der mindestens 5° höher ist als der statische Anfangskontaktwinkel von Wasser des Bindemittels nach 3 min Äquilibrieren.

3.  Die Zusammensetzung gemäß Anspruch 1 oder 2, wobei das Wachs einen polaren Anteil der Oberflächenenergie von 10 % oder weniger aufweist.

4.  Die Zusammensetzung gemäß einem der vorangegangenen Ansprüche, wobei das Wachs den polaren Anteil der Oberflächenenergie um mindestens 8 Prozentpunkte senkt.

5.  Die Zusammensetzung gemäß einem der vorangegangenen Ansprüche, wobei das Silikonöl ein mittleres Molekulargewicht von 1000 bis 20000 g/mol aufweist.

6.  Die Zusammensetzung gemäß einem der vorangegangenen Ansprüche, wobei das Silikonöl eine Viskosität von 75 bis 135 mm$^2$/s aufweist.

7.  Die Zusammensetzung gemäß einem der vorangegangenen Ansprüche, wobei die Pigment-Volumen-Konzentration 30 bis 55 Vol.-% beträgt.

8.  Die Zusammensetzung gemäß einem der vorangegangenen Ansprüche, wobei das Wachs ein Polyethylen- oder ein Polyamidwachs ist.

9.  Die Zusammensetzung gemäß einem der vorangegangenen Ansprüche, wobei die Zusammensetzung eine Form- oder Beschichtungsmasse ist.

10. Die Zusammensetzung gemäß Anspruch 9 wobei die Zusammensetzung ein Anstrichmittel oder Putz ist.

11. Beschichtung auf einer Substratoberfläche enthaltend

    - ein hydrophobes Wachs;
    - ein Silikonöl welches ausschließlich Hydrocarbylseitenketten enthält; und
    - ein hydrophiles Bindemittel
    - Pigmente und/oder Füllstoffe

    wobei
    die Zusammensetzung

    - eine Pigment-Volumen-Konzentration von 25 bis 60 % gemäß EN ISO 4618-1;

aufweist

wobei

"hydrophob" bedeutet, dass der statische Anfangskontaktwinkel von Wasser nach 3 min Äquilibrieren > 90° ist;

"hydrophil" bedeutet, dass der statische Anfangskontaktwinkel von Wasser nach 3 min Äquilibrieren ≤ 90° ist.

**12.** Verwendung einer Zusammensetzung nach einem der Ansprüche 1 bis 8 als Form- oder Beschichtungsmasse.

**13.** Verwendung nach Anspruch 12 wobei die Form- oder Beschichtungsmasse ein Anstrichmittel oder Putz ist.

**Claims**

**1.** A compound containing

- a hydrophobic wax;
- a silicone oil containing exclusively hydrocarbyl side chains; and
- a hydrophilic binding agent
- pigments and/or fillers

wherein

the compound has

- a pigment volume concentration of 25 to 60 % according to EN ISO 4618-1 (wherein the quantity is relative to the total of all pigments and fillers);

wherein

"hydrophobic" means that the initial static contact angle with water after 3 minutes' equilibration time is >90°;

"hydrophilic" means that the initial static contact angle with water after 3 minutes' equilibration time is ≤90°.

**2.** The compound according to claim 1, wherein the wax has an initial static contact angle with water after 3 minutes' equilibration time that is at least 5° greater than the initial static contact angle with water of the binding agent after 3 minutes' equilibration time.

**3.** The compound according to either of claims 1 or 2, wherein the wax has a polar fraction of the surface energy of 10 % or less.

**4.** The compound according to any one of the preceding claims, wherein the wax lowers the polar fraction of the surface energy by at least 8 percentage points.

**5.** The compound according to any one of the preceding claims, wherein the silicone oil has an average molecular weight of 1,000 to 20,000 g/mol.

**6.** The compound according to any one of the preceding claims, wherein the silicone oil has a viscosity of 75 to 135 $mm^2$/s.

**7.** The compound according to any one of the preceding claims, wherein the pigment volume concentration is 30 to 55 % by volume.

**8.** The compound according to any one of the preceding claims, wherein the wax is a polyethylene or polyamide wax.

**9.** The compound according to any one of the preceding claims, wherein the compound is a moulding or coating compound.

**10.** The compound according to claim 9, wherein the compound is a coating compound or rendering.

**11.** A coating on a substrate surface containing

- a hydrophobic wax;

- a silicone oil containing exclusively hydrocarbyl side chains; and
- a hydrophilic binding agent
- pigments and/or fillers

wherein
the compound has

- a pigment volume concentration of 25 to 60 % according to EN ISO 4618-1;

wherein
"hydrophobic" means that the initial static contact angle with water after 3 minutes' equilibration time is >90°;
"hydrophilic" means that the initial static contact angle with water after 3 minutes' equilibration time is ≤90°.

**12.** Use of a compound according to any one of claims 1 to 8 as a moulding or coating mass.

**13.** Use according to claim 12, wherein the moulding or coating mass is a coating compound or rendering.

**Revendications**

**1.** Composition contenant

- une cire hydrophobe ;
- une huile de silicone, laquelle contient exclusivement des chaînes latérales de l'hydrocarbyle ; et
- un agent liant hydrophile
- des pigments et/ou des agents de charge,

la composition

- comportant une concentration de volume pigmentaire de 25 à 60 % selon la norme EN ISO 4618-1 (la quantité se rapportant à la totalité des pigments et agents de charge) ;

« hydrophobe « signifiant que l'angle de contact statique initial de l'eau après 3 mn d'équilibrage est > 90° ;
« hydrophile » signifiant que l'angle de contact statique initial de l'eau après 3 mn d'équilibrage est ≤ 90°.

**2.** La composition selon la revendication 1, la cire présentant, après 3 mn d'équilibrage un angle de contact statique initial de l'eau qui est supérieur d'au moins 5° à l'angle de contact statique initial de l'eau de l'agent liant après 3 mn d'équilibrage.

**3.** La composition selon la revendication 1 ou 2, la cire présentant une part polaire d'énergie superficielle de 10 % ou moins.

**4.** La composition selon l'une quelconque des revendications précédentes, la cire faisant baisser la part polaire de l'énergie superficielle d'au moins 8 pour cent.

**5.** La composition selon l'une quelconque des revendications précédentes, l'huile de silicone présentant un poids moléculaire moyen de 1000 à 20000 g/moles.

**6.** La composition selon l'une quelconque des revendications précédentes, l'huile de silicone présentant une viscosité de 75 à 135 mm$^2$/s.

**7.** La composition selon l'une quelconque des revendications précédentes, la concentration de volume pigmentaire étant de 30 à 55 % en volume.

**8.** La composition selon l'une quelconque des revendications précédentes, la cire étant une cire de polyéthylène ou de polyamide.

**9.** La composition selon l'une quelconque des revendications précédentes, la composition étant une masse de façonnage ou de revêtement.

10. La composition selon la revendication 9, la composition étant une peinture ou un enduit.

11. Revêtement sur une surface de substrat, contenant

- une cire hydrophone ;
- une huile de silicone, laquelle contient exclusivement des chaînes latérales de l'hydrocarbyle ; et
- un agent liant hydrophile
- des pigments et/ou des agents de charge,

la composition

- comportant une concentration de volume pigmentaire de 25 à 60 % selon la norme EN ISO 4618-1

« hydrophobe « signifiant que l'angle de contact statique initial de l'eau après 3 mn d'équilibrage est > 90° ;
« hydrophile » signifiant que l'angle de contact statique initial de l'eau après 3 mn d'équilibrage est ≤ 90°.

12. Utilisation d'une composition selon l'une quelconque des revendications 1 à 8 en tant que masse de façonnage ou de revêtement.

13. Utilisation selon la revendication 12, la masse de façonnage ou de revêtement étant une peinture ou un enduit.

Abbildung 1

EP 2 883 918 B1

Abbildung 2

Abbildung 3

Abbildung 4

Abbildung 5

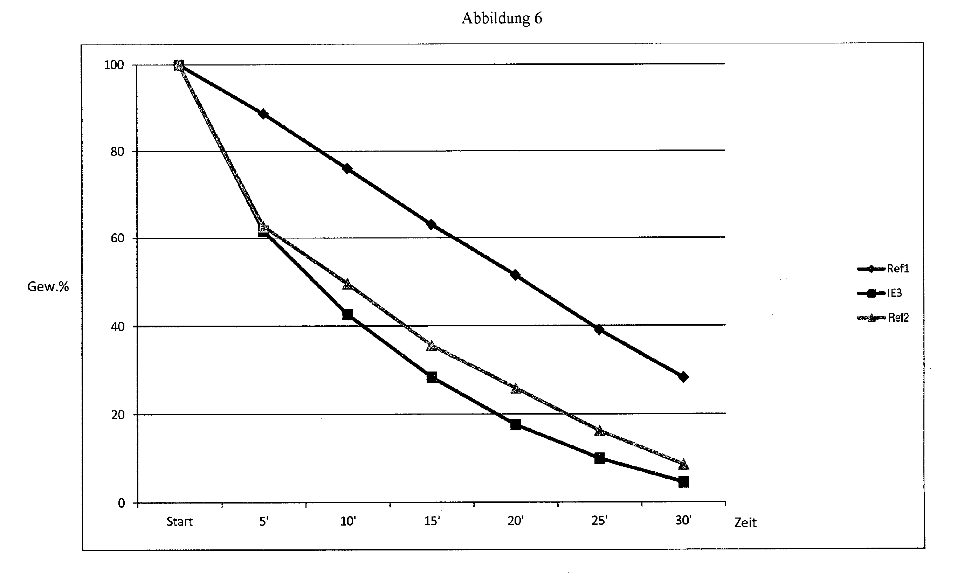

Abbildung 6

Abbildung 7

EP 2 883 918 B1

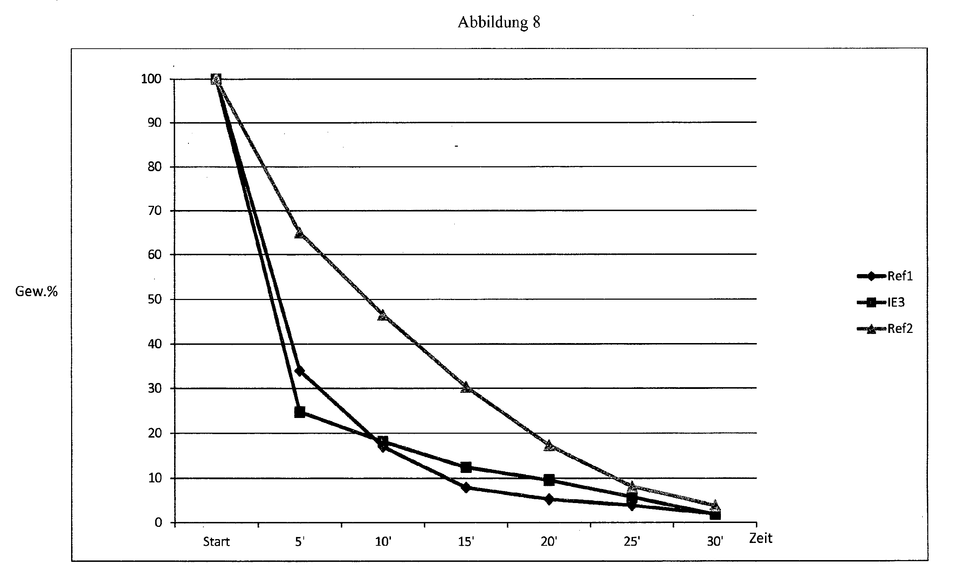

Abbildung 8

EP 2 883 918 B1

**IN DER BESCHREIBUNG AUFGEFÜHRTE DOKUMENTE**

**In der Beschreibung aufgeführte Patentdokumente**

- EP 1144332 A